Europäisches Patentamt

(19) European Patent Office

Office européen des brevets

(11) Publication number: **0 125 683**

**A2**

(12) # EUROPEAN PATENT APPLICATION

(21) Application number: **84105455.4**

(22) Date of filing: **14.05.84**

(51) Int. Cl.³: **F 16 B 19/02**

(30) Priority: **19.05.83 US 496001**

(43) Date of publication of application:
**21.11.84 Bulletin 84/47**

(84) Designated Contracting States:
**DE FR GB**

(71) Applicant: **ADJUSTABLE BUSHING CORPORATION**
**8330 Lankershim Boulevard**
**North Hollywood California 91605(US)**

(72) Inventor: **Wing, Gee Lew**
**3664 Primavera Avenue**
**Los Angeles California 90065(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) An improved radially expandable bushing assembly.

(57) A radially expandable bushing assembly includes a male segment and a captured split female ring. The male segment has the frusto-conical ramp that engages a complementary frusto-conical bore of the female member and expands the ring upon axial movement of the segment into the ring. The male segment captures the ring by interference between an external flange of the segment and an internal flange of the ring in one axial direction and the ramp and the frusto-conical bore in the other axial direction. The external flange is within a relief of the ring that borders the internal flange. The relief is contiguous to an annular, radially extending bearing surface of the ring at one axial end of the ring. The internal flange is radially outward of a neck of the male segment. The neck joins the frusto-conical ramp. A right cylindrical base of the segment joins the large end of the frusto-conical ramp. An axial compressive force on this base and the bearing surface of the ring produces the axial movement of the segment with respect to the ring and expansion of the ring. In one adaptation, the assembly becomes a panel fastener; in this adaptation the male segment is internally threaded to receive the threads of a male member. The axially extending surface of the ring is knurled as is the bearing surface of the ring. The ring and nut are in radial compression before expansion. The knurled radial surface engages the backside of a front panel to hold the assembly and the nut from turning during the threading of the screw into the male segment. Upon expansion, the ring engages the radial bore of the backside sheet to join the sheets together.

Fig. 3.

15205/ERC                                    -1-

# AN IMPROVED RADIALLY EXPANDABLE BUSHING ASSEMBLY

## Background of the Invention

The present invention relates to radially expanding fasteners adapted to expand and apply a radial compressive force on the wall of a bore in receipt of the fastener.

Radially expandable fasteners have been known for some time. One particular popular type of such a fastener is a bushing assembly of a split ring and a male segment that have cooperating frusto-conical surfaces which when compressed together expand the ring. Such an arrangement is described in U.S. Patent 3,192,820. The expanded ring radially compresses the wall of a bore of one or more work pieces or sheets. Typically, several bushings are stacked to effect expansion throughout the grip length of the members being joined. In the middle of the stack, double ended male segments with opposed frusto-conical ramp surfaces alternate between single rings having opposed frusto-conical surfaces. Each male segment works on two rings, one for each of the frusto-conical surfaces. At the end of the stack, bushings with only single frusto-conical surfaces are used. The foreshortening axial movement that produces expansion usually occurs with the male segments. If the stack array is not proper, as when an end bushing is not reversed, the fastener will not work because the foreshortening cannot occur.

Axial foreshortening is done by any number of techniques. One way is a bolt and a nut. The bolt head and the nut engage the male segments and force them into the rings to expand them; alternatively, the nut and bolt head can engage the rings and force them over the segments to expand the rings. A handle actuated cam and inner pin can replace the nut and bolt to shorten the bushing stack and produce expansion.

This type of fastener has high shear strength. It is readily used because during insertion its diameter is less than when expanded to join the work pieces. It also easily aligns misaligned holes because of its quality of expanding its diameter during the installation of the fastener. The fasteners can be either blind or not depending on the application.

This type of fastener has been adapted into a panel fastener. In the panel fastener, the male segment acts as a nut and cooperates with a male threaded pin, such as a bolt or screw, in a traditional manner. A ring on the nut expands when its frusto-conical surface draws up a frusto-conical ramp of the nut. A radial bearing surface at an end of the ring engages the backside of the front panel so that the ring does not turn during tightening and unloosening the fastener. The nut and ring are held together so that they do not turn with respect to one another. The bearing surface of the ring can be roughened. This type of fastener is described in U.S. Patent 3,373,648.

Summary of the Invention

The present invention provides an expandable fastener characterized by the physical capture of an expandable female ring by a male segment that expands it.

In a presently preferred form, the present invention contemplates a bushing of a female ring captured by a male segment. The ring has an axially extending relief at one end that bottoms at an inwardly extending, internal flange, preferably annular. An external flange of the segment is received in the relief and can abut the internal flange to effect interference between the segment and the ring in one direction, abutting occurring at radial shoulders of the flanges. Interference in the opposite direction is between a frusto-conical ramp of the segment and a cooperating frusto-conical bore of the ring. Preferably, a neck in between the external flange and the frusto-conical ramp lies radially within the internal flange of the ring. A base or bearing end of the male segment extends from the large end of the frusto-conical ramp for compressive engagement by an element such as a spacer or another bushing. A bearing surface of the ring on the end of the bushing opposite the base of the male segment is for compressive engagement. The external flange or the segment is spaced from the bearing surface of the ring so that the latter always bears the axial load that expands the ring and this occurs because the relief is longer than the flange. When the base and the surface are compressed, the ring is expanded.

When two or more of the assemblies are used together it makes no difference how they are oriented. Thus relieved ends of the female rings can face each other, or the base of the male segment can face the relieved end of an adjacent ring.

The bushing is used with means to effect compressive engagement between the ramp and the frusto-conical bore. These means may include a pin received by the bushing with means to foreshorten the distance between space apart portions of the pin and apply an axial compressive force on the ends of the bushing, such means might include a head of the pin and a thrust washer. One or more spacers on the pin can be used to transmit the compressive force and to locate the bushing or bushings.

The invention readily adapts into a panel fastener. In this arrangement, the male segment is internally threaded and accepts a male threaded member such as a screw or nut. The male threaded member has means to receive torque, such as a screw driver slot. The male segment captures the female ring by an internal flange of the ring snapping over an external flange of the segment in a relief of the ring and interference between frusto-conical surfaces of the ring and segment. A radial bearing surface at an end of the ring, the mouth of the relief, is preferably roughened to engage the backside surface of a front panel during the setting process and prevent rotation of the ring. Means is provided to prevent relative rotation between the nut and the ring, such as having the ring slightly expanded on the nut to compress the ring against the nut. Preferably, the axially extending surface of the expandable ring is roughened as by a knurl to augment rotation resistance when it engages the wall of a bore in the backside panel.

These and other features, aspects and advantages of the present invention will become more apparent from the following description, appended claims and drawings.

BRIEF DESCRIPTION OF THE FIGURES

Figure 1 is an exploded elevational view of a radially expandable fastener in accordance with a preferred form of the present invention with a female ring shown in axial cross-section:

Figure 2 shows in elevation an adaptation of the fastener of Figure 1 in an arrangement with two of the fasteners used for aligning panels and fastening the panels together, one of the bushings being shown partly broken away in axial cross-section; and,

Figure 3 is an elevation view showing the present invention as a panel fastener with a portion of the fastener broken away and a portion shown in axial cross-section with the fastener mounted in panels shown in section.

## Description of the Preferred Embodiments

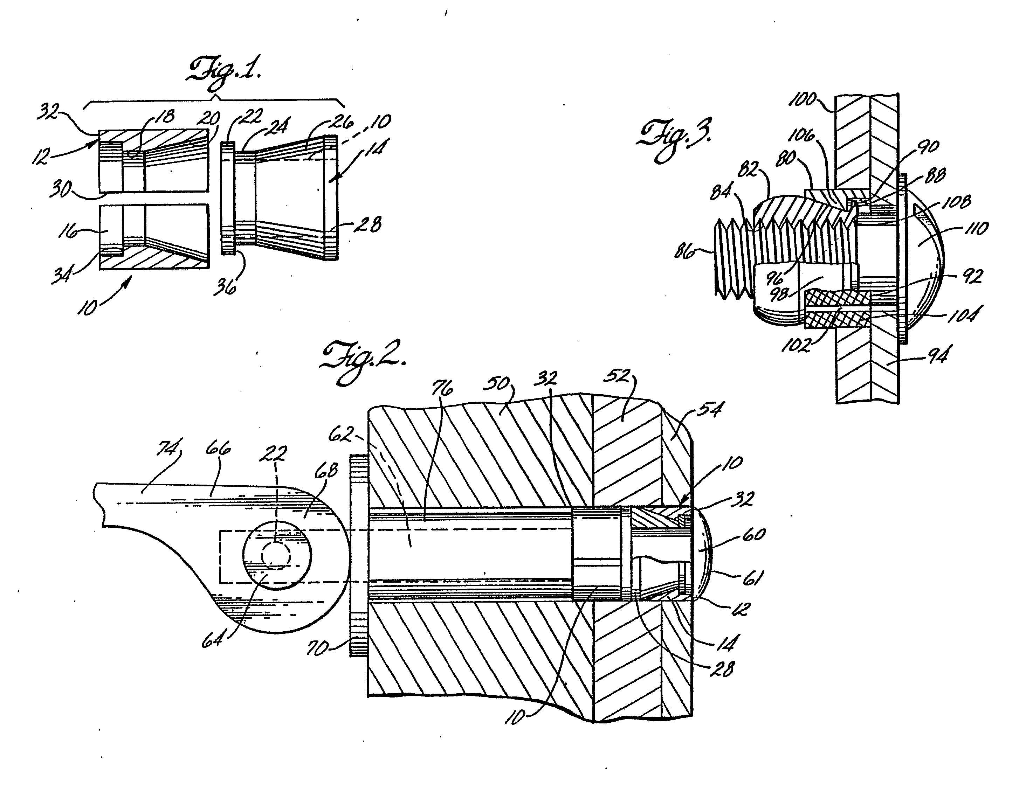

Figure 1 shows an expandable fastener or bushing 10, in accordance with the preferred form of the present invention. The fastener includes a female split-ring 12 that is captured by a male segment 14. (The capture is not shown in Figure 1, as it is an exploded view.) The female ring has a right cylindrical relief 16 extending from one of its ends to an internal radially extending flange 18. Flange 18 has a bore for the passage of a pin. A frusto-conical bore 20 meets the flange at the small end of the bore and extends axially away from that juncture with constantly increasing diameter and opens at the ring opposite the relief.

The male segment has an external, radially extending, annular flange 22 that in assembly is received in relief 16. The axial length of the flange is shorter than the axial length of the relief. A neck 24 of the segment nests radially within internal flange 18. Frusto-conical ramp 26 nests within frusto-conical bore 20. Base 28 extends axially away from the adjoining end of the ring.

In greater detail, ring 12 has a slit 30 extending its axial length. Recess 16 is right cylindrical. Internal flange 18 is also right cylindrical along its bore and presents a radial shoulder 34 for engagement by a cooperating radial shoulder 36 of external flange 22 of the segment in the prevention of the segment from being withdrawn from the ring. A bearing surface 32 at one axial end of the ring is annular and extends radially from the axis of the ring. Bearing surface 32 is to engage any number of cooperating surfaces or other structure to apply a force on the ring during the relative movement between the segment and the ring that produces expansion.

The segment radial flange 22 is right cylindrical and its free end is radial. Base 28 of the segment is also right cylindrical and its free end radial. Segment 14 has a bore 40 for the receipt of a pin. The external taper of surface 26 corresponds to the internal taper of bore 20. Relative axial movement of the segment and the ring that engages surface 26 and bore 20 produces radial pressure acting around the ring and the ring's expansion, slit 30 facilitating the expansion.

An adaptation of the radially expandable bushing of Figure 1 is shown in Figure 2. In Figure 2, a fastener assembly of the invention clamps together three sheets or panels 50, 52, and 54 while aligning the panels by aligning holes through them. Adjacent of the radially expandable bushings 10 are received by a pin 60. The pin has a head 60 that engages bearing surface 32 of ring 12 of the right hand bushing. The adjacent radially expandable bushing on the left is inverted end-to-end with respect to its right hand neighbor so that base 28 of its male segment abuts base 28 of the right hand bushing. Pin 60 has a shank 62 that extends through the sheets and into threads of a barrel nut 64 which it engages with complementary threads. The barrel nut mounts on a cam 66 that has bifurcated rises 68 that pass the pin and straddle it. These rises bear on a thrust washer 70. A fastener 72 can lock pin 60 to the barrel nut. A handle 74 extends away from rises 68 for operating the assembly.

A sleeve or spacer 76 extends between thrust washer 70 and bearing surface 32 of the left hand bushing.

The assembly is inserted unexpanded into the holes in the work pieces. With such insertion, the

0125683

assembly takes the appearance that it does in Figure 2. After insertion, cam handle 74 is rotated counterclockwise to apply a compressive force on thrust washer 70 and through head 61 on the elements between the head and the thrust washer, spacer 76 and the two bushings. This foreshortens the distance between the thrust washer and the pin head causing the rings of the bushings to initially expand against the bores of the walls of the sheets and then apply a clamp-up force on the sheets that compresses them together and against the thrust washer. As the thrust washer engages the sheets in addition to the spacer. The faying surfaces of the sheets are crossed by the rings; consequently the sheets displace to align their bores and themselves during this expansion process.

During expansion, head 61 of pin 60 engages bearing surface 32 of adjacent right hand ring 12 and forces its frusto-conical bore axially along the constrained frusto-conical ramp 26 of segment 14 to expand the ring. An axial space between the radially extending flange 22 at the end of the segment and bearing surface 32 at the end of the ring permits this relative axial displacement. The same thing happens on the left hand bushing. The ring of the left hand bushing is forced by the sleeve 76 acting on bearing surface 32 to the right in Figure 2 in the opposite direction from the ring of the right hand bushing, up the ramp of the segment, and radially outward into compressive engagement with adjacent bore surfaces of sheets 50 and 52.

Obviously, the position of the bushing assemblies in a stack can be varied at will. For example, instead of having the two bushings adjacent, they can be remote with a spacer between them. As another example,

0125683

a shorter sleeve can be used with another bushing assembly if still a further sheet is to be engaged or if it is desired to engage the front sheet close to the thrust washer.

Figure 3 shows the adaptation of the present invention into a panel fastener. In Figure 3, a split-ring 80 is captured by a nut 82. The nut corresponds to male segment 14 of the previously described embodiment, but with some modifications. One of the modifications is an internally threaded bore 84 for receiving the threads of a male fastener 86, such as a bolt or a screw. A radially extending, external flange 88 of the nut is received in a relief 90 of the ring. Again, an axial space between the end of ring 80 proximate external flange 88 and the end of the latter accommodates axial movement of the ring with respect to the nut while maintaining the proper surfaces in axial bearing.

A bearing end 92 of ring 80 is radially knurled for gripping an adjacent surface on the backside of a front panel 94. A frusto-conical bore 96 of the ring mates with a frusto-conical ramp 98 of the nut. In its most relaxed position, the ring and the nut compressively engage at the surfaces of the bore and ramp so that the nut and ring cannot rotate with respect to one another. As before, axial displacement of the ring on the nut to drive the ring up the ramp expands the ring. The expansion effects a tightening against the wall of a bore of a backside panel 100.

The ring has a slit 102 extending its entire axial length. A knurl on the axially extending circumferential outer surface of the ring provides a knurled for better grip on the bore of the wall of the backside panel. The capture of the ring with the bushing is in the manner of the capture in the previous embodiment. An internal, radially inward extending flange 106 of the ring lies radially outward of a neck 108 of the nut. The neck is between radially extending shoulder 88 and ramp 98. The ramp and the external flange of the nut interfere with the conical bore and the internal flange to provide the capture. Male fastener 86 has a head 110 for threading the fastener into the threads of the nut or for unthreading them. The head has means for accepting a setting and removal torque such as a standard screw driver slot.

In operation of Figure 3 embodiment, the panel fastener is disassembled by separating the male fastener. The male fastener is passed through a hole in the front side sheet. The nut is threaded into the fastener until the ring bears against the backside of the front sheet. The nut and ring are then prevented from rotation by the friction between the front sheet and the ring and the friction between the ring and the nut. Male fastener 86 is then tightened, which forces the nut to the right in the Figure and the ring is expanded by the frusto-conical surface of the nut moving into the bore of ring. The ring expands and tightly engages the bore in the back panel. It has been found that adequate engagement can be effected in a quarter-turn of the male fastener. For example, the quarter-turn engagement results from a 1/4-20 standard screw with an included angle of between 25° to 30°. When the screw is loosened from the nut, the ring contracts and frees the backside panel from the frontside panel.

The present invention has been described with reference to certain preferred embodiment. The spirit spirit and scope of the appended claims should not

0125683

necessarily be limited to the foregoing description. In addition to the quick acting pin and panel fastener specifically described, the invention has application to blind bolts that employ a standard nut on a threaded pin in place of the cam of the quick acting pin, to clamp-up bolts that have the pin threaded at both ends receiving clamp-up nuts, and headed bolts that have a manufactured head on the pin and a nut on a thread at the end opposite the head.

WHAT IS CLAIMED IS:

1.    An expandable fastener bushing comprising:

(a). a female ring having first and second ends, a frusto-conical bore diverging towards and opening at the first end, an axial relief opening at the second end, a slit through the ring and extending its axial length, a radial bearing surface at the second end, and an internal flange between the bore and the relief having an internal diameter less than the diameter of the relief; and

(b). a male segment having an axial bore throughout its length, a frusto-conical ramp complementing and residing in the bore of the ring, a bearing end at the large end of the ramp and extending from the ring, an external flange in the relief, and a neck between the recess and the ramp, the external flange being shorter than the axial length of the relief, the segment and the ring being held together by the external flange of the segment interfering with the internal flange of the ring towards the first end and the ramp interfering with the bore towards the second end.

2.    The expandable fastener claimed in claim 1 wherein: the external flange and the relief are right cylindrical.

3.    The expandable fastener bushing claimed in claim 2 wherein bearing end of the segment is right cylindrical.

4.    The expandable fastener bushing claimed in claim 2 wherein the neck and the internal flange are right cylindrical.

5.    The expandable fastener bushing claimed in claim 1 wherein the bearing surface of the ring is roughened to enhance frictional resistance to rotation.

0125683

6.    An expandable fastener comprising:

(a). a pin;

(b). at least one fastener bushing received by the pin, the bushing including:

(i). a female ring having first and second ends, a frusto-conical bore diverging towards and opening at the first end, an axial relief opening at the second end, a slit through the ring and extending its axial length, a radial bearing surface at the second end, and an internal flange between the relief and the bore;

(ii). a male segment having an axial bore extending its entire length, a frusto-conical ramp within the frusto-conical bore of the ring, a bearing end at the large end of the ramp and extending axially from the ring, an external flange in the relief, the internal flange having a length in an axial dimension less than the axial length of the relief, the segment and the ring being held together by axial interference between the external flange of the segment and the internal flange of the ring in the direction toward the first end of the ring, and between the ramp and the frusto-conical bore in the direction toward the second end of the ring; and

(c). means foreshortening the axial length of the bushings and to apply an axial compressive force to the bearing ends of the male segment and the ring to force the ramp against the frusto-conical bore and expand the ring.

7.    The expandable fastener claimed in claim 6 including at least one spacer on the pin and forming a part of the foreshortening and axial compressive force application means.

8.    The expandable fastener claimed in claim 7 including at least two of the fastener bushings on the pin.

9.   The expandable fastener claimed in claim 6 wherein the internal flange of the ring and the external flange of the segment are annular.

10.   The expandable fastener claimed in claim 9 wherein the force application means includes a thrust washer and a pin head straddling the bushing.

11.   The expandable fastener claimed in claim 10 wherein the foreshortening and axial compressive force application means includes a cam with a rise in bearing on the thrust washer, and means connecting the cam and the pin to permit the cam to rotate and apply the force to the thrust washer and foreshorten the distance between the pin head and the washer.

12.   The expandable fastener claimed in claim 9 including at least two of the fastener bushings on the pin.

13.   The expandable fastener claimed in claim 12 including at least one spacer on the pin, the spacer being included in the foreshortening and axial compressive force application means.

14.   An improved panel radially expandable panel fastener comprising:

(a).   a male threaded member having means for receiving torque;

(b).   an internally threaded nut having a thread engaged with the thread of the male threaded member, frusto-conical ramp, and an external flange spaced from the small end of the ramp;

(c).   a ring having:

(i).   an axial slit extending the length of the ring,

(ii).   a frusto-conical bore receiving the frusto-conical ramp of the nut,

(iii). an internal relief at one end of the ring, axially spaced from the ramp, and in receipt of the external flange of the nut, the relief having an axial length greater than the axial length of the external flange,

(iv). an internal flange between the relief and the frusto-conical bore interfering with the external flange of the nut in one axial direction, the ramp and the frusto-conical bore interfering in the opposite axial direction,

(v). a radial bearing surface on the relief end of the ring for bearing on the backside of a front panel, and

(vi). means between the ring and the nut to prevent relative rotation between the two, whereby tightening the nut on the male threaded member engages the backside of a front panel with the radial bearing surface and the ring expands to engage the bore of a back panel.

15. The improved panel fastener claimed in claim 14 wherein the means between the ring and the nut to prevent rotation comprises the ring and the nut being in compressive engagement along the ramp and the frusto-conical bore.

16. The improved panel fastener claimed in claim 15 wherein the radial bearing surface has means to frictionally engage the backside of the front panel.

17. The improved panel fastener claimed in claim 16 wherein the external axial surface of the ring has means to frictionally engage the bore of a back panel.

18. The improved panel fastener claimed in claim 17 wherein the friction means on the radial bearing surface and on the external axial surface

0125683

are knurls.

19.  The improved panel fastener claimed in claim 14 wherein the internal and external flanges are annular.

20.  The improved panel fastener claimed in claim 19 wherein the means between the ring and the nut to prevent rotation comprises the ring and the nut being in compressive engagement along the ramp and the frusto-conical bore.

21.  The improved panel fastener claimed in claim 20 wherein the radial bearing surface of the ring is roughened to frictionally engage the backside of a front panel.

Fig.1.

Fig.2.

Fig.3.